# EUROPÄISCHE PATENTSCHRIFT

(11) **EP 2 824 543 B1**
(45) Veröffentlichungstag und Bekanntmachung des Hinweises auf die Patenterteilung: **12.10.2016**
(21) Anmeldenummer: 14169120.4
(22) Anmeldetag: 20.05.2014
(51) Int. Cl.: G06F 3/023, G06F 3/0346, G06K 19/077

(54) **Dokument mit einer integrierten Anzeigevorrichtung**
Document with an integrated display device
Document doté d'un dispositif d'affichage intégré

(30) Priorität: 11.06.2013 DE 102013210842
(43) Veröffentlichungstag der Anmeldung: 14.01.2015
(73) Patentinhaber: Bundesdruckerei GmbH, 10969 Berlin (DE); Bundesrepublik Deutschland, vertreten durch das Bundesministerium des Innern, vertreten durch das Bundesamt für Sicherheit in der, 53175 Bonn (DE)
(72) Erfinder: Tietke, Markus, 12169 Berlin (DE); Fischer, Jörg, 13053 Berlin (DE); Paeschke, Manfred, 16348 Wandlitz (DE); Breitaupt, Ralph, 53604 Bad Honnef (DE); Ullmann, Markus, 53489 Sinzig (DE)
(74) Vertreter: Richardt Patentanwälte PartG mbB

(56) Entgegenhaltungen:
- EP-A1- 2 321 809
- DE-A1-102011 085 537
- DE-T5-112004 002 257
- US-A1- 2009 262 074
- US-A1- 2010 125 816

## Beschreibung

Die Erfindung betrifft ein Dokument mit einer integrierten Anzeigevorrichtung, ein Verfahren zur Steuerung einer integrierten Anzeigevorrichtung eines Dokuments, ein Computerprogrammprodukt sowie ein elektronisches System mit einem besagten Dokument mit Anzeigevorrichtung.

Dokumente mit integrierten Anzeigevorrichtungen sind aus dem Stand der Technik bekannt. Beispielsweise gibt es Wert- oder Sicherheitsdokumente in überwiegend Papier basierter Form, wie zum Beispiel als Banknoten, als elektronischer Reisepass oder als Kunststoff basierte Chipkarte, insbesondere als sogenannte Smartcard, mit kontaktbehafteter, kontaktloser oder Dual-Interface-Ausführung.

Sicherheits- oder Wertdokumente können mit einer kontaktlosen Schnittstelle, beispielsweise einem RFID-Interface und/oder NFC-Interface ausgestattet sein oder mit einer Schnittstelle, die sowohl eine drahtgebundene als auch eine drahtlose Kommunikation mit einem Chipkartenterminal zulässt. Im letzteren Fall spricht man von den sogenannten Dual Interface-Chipkarten. Entsprechende Chipkarten-Kommunikationsprotokolle und Verfahren sind z.B. in der Norm ISO 14443 festgelegt.

Aus der DE 2011 085 537 A1 ist beispielsweise ein Dokument mit zumindest einer Antenne zur Einkopplung von elektrischer Energie eines elektromagnetischen Feldes bekannt, ferner mit zumindest einem Speicher zur Speicherung eines ausführbaren Programms, Prozessormitteln zur Ausführung des Programms, wobei die Prozessormittel dazu ausgebildet sind, aufgrund der Einkopplung der elektrischen Energie automatisch die Ausführung des Programms zu starten, und mit Signalerzeugungsmitteln zur Erzeugung eines Eingabesignals zur Eingabe in das Programm, nachdem dessen Ausführung aufgrund der Einkopplung der Energie durch die Prozessormittel gestartet worden ist, wobei die Signalerzeugungsmittel so ausgebildet sind, dass das Eingabesignal von einer in die zumindest eine Antenne durch das Feld induzierten Antennenspannung abhängt.

Die US 2009/0262074 A1 beschreibt ferner Systeme und Verfahren welche die Interaktion mit tragbaren elektronischen Geräten vereinfachen soll, basierend auf der Detektion einer Rotationsrate um zumindest drei Achsen und der lineare Beschleunigung entlang dieser Achsen.

Die EP 2 321 809 B1 beschreibt eine RFID-Gerät, welches einen Mechanismus zur Bewegungsdetektion beinhaltet. Der Mechanismus zur Detektion der Bewegung ist dazu ausgebildet die Bewegung des RFID-Gerätes zu detektieren und dementsprechend die Fähigkeit des RFID-Geräts Nachrichten zu übermitteln, welche sensible Daten enthalten können, zur zuzulassen oder zu verhindern, sobald das RFID-Gerät in einem RF-Feld platziert wird.

Die DE 11 2004 002 257 T5 beschreibt weiter eine Touchscreensteueranordnung mit einem Touchscreen, der über eine erste und zweite leitfähige Schicht verfügt, die so angeordnet sind, dass sie durch Berühren des Touchscreens zusammengebracht werden, und mit einer Erfassungsanordnung, die so angeordnet ist, dass sie durch das Überwachen elektrischer Signale von wenigstens einer der Schichten eine Kontaktposition erfasst, an welcher der Touchscreen berührt wird, wobei die Anordnung ferner eine Antenne und die Erfassungsanordnung einen Annäherungserfassungssignalgenerator aufweist, der dazu ausgebildet ist, ein Annäherungserfassungssignal zu erzeugen, das über einen Benutzer der Anordnung zwischen der Antenne und der ersten Schicht übertragen wird, und die Erfassungsanordnung ferner dazu ausgebildet ist, das übertragene Annäherungserfassungssignal zu empfangen und daraus die Entfernung zwischen einem Körperteil des Benutzers und dem Touchscreen zu bestimmen.

Der Erfindung liegt die Aufgabe zugrunde, ein verbessertes Dokument mit einer integrierten Anzeigevorrichtung, ein verbessertes Verfahren zur Steuerung einer integrierten Anzeigevorrichtung eines Dokuments, ein entsprechendes Computerprogrammprodukt und ein verbessertes elektronisches System mit einem oben besagten Dokument bereitzustellen.

Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Es wird ein Dokument mit einer integrierten Anzeigevorrichtung beschrieben, einem ersten Mittel zum Empfang einer ersten Eingabe und einem Prozessormittel, wobei die Anzeigevorrichtung dazu ausgebildet ist, eine beschränkte Anzahl von Zeichen einer Zeichenmenge gleichzeitig anzuzeigen, wobei das Prozessormittel dazu ausgebildet ist, die Vorrichtung anzusteuern zum:
- gleichzeitigem Anzeigen eines ersten Teils der Zeichen der Zeichenmenge,
- nach Empfang der ersten Eingabe, Ersetzen der gleichzeitigen Anzeige des ersten Teils der Zeichen durch Anzeige eines zweiten Teils der Zeichen der Zeichenmenge, wobei der zweite Teil von dem ersten Teil zumindest teilweise verschieden ist

Ausführungsformen der Erfindung könnten den Vorteil haben, dass trotz einer eventuell klein dimensionierten Anzeigevorrichtung auf einem Dokument die Anzeigevorrichtung dazu verwendet werden kann, Zeichen einer größeren Zeichenmenge darzustellen. Anstatt also die integrierte Anzeigevorrichtung möglichst groß dimensioniert in das Dokument zu integrieren, könnten nach und nach die einzelnen Teile der Zeichen der Zeichenmenge nacheinander dargestellt werden. Der Benutzer kann diese Darstellung der Zeichen mittels der ersten Eingabe steuern.

Nach einer Ausführungsform der Erfindung handelt es sich bei der Zeichenmenge um eine Zeichensequenz, wobei es sich bei dem ersten Teil und bei dem zweiten Teil um aufeinanderfolgende Zeichen der Zeichensequenz handelt, wobei sich der erste und der zweite Teil überlappen oder wobei in der Zeichensequenz der zweite Teil unmittelbar auf den ersten Teil folgt.

Damit könnte das Dokument in der Lage sein, auch komplexe und länger zusammenhängende Zeichenketten einem Benutzer des Dokuments bereitzustellen. Im Falle des teilweisen Überlappens des ersten und zweiten Teils könnte sich für den Benutzer der Vorteil bieten, dass zumindest ein Teil der durch die Anzeigevorrichtung angezeigten Zeichen länger als nur für die Zeitdauer der Darstellung eines einzelnen Zeichens erfassbar ist. Der Benutzer könnte damit in einfacher Weise intuitiv die durch die Anzeigevorrichtung dargestellten Teile der Zeichen erfassen.

Nach einer Ausführungsform der Erfindung umfasst das Dokument ferner zweite Mittel zur Erfassung einer zweiten Eingabe zur Bestätigung des aktuell durch die Anzeigevorrichtung angezeigten Teils der Zeichen, wobei durch die zweite Eingabe ein bestätigter Zeichenteil erhältlich ist. Zum Beispiel ist das Prozessormittel dazu ausgebildet, zum
- Empfang einer Anzahl der bestätigten Zeichen und einer Zeichenfolge, wobei sich aus der Reihenfolge der bestätigten Zeichenteile eine Zeichenkette ergibt,
- Verarbeitung der Zeichenkette

Über die entsprechende Eingabe einer Zeichenkette durch nach und nach Bestätigung der aktuell durch die Anzeigevorrichtung angezeigten Teile der Zeichen ist es möglich, beispielsweise Steuerbefehle an die Prozessormittel des Dokuments zu übermitteln.

Ein denkbares Szenario wäre, dass das Dokument zum Beispiel über eine Nahfeld-Kommunikationsschnittstelle mit einem Lesegerät in Kontakt steht. Damit Daten zwischen dem Lesegerät und dem Dokument übermittelt werden können, könnte es hier aus Sicherheitsaspekten eine entsprechende Bestätigung durch den Benutzer des Dokuments erforderlich sein. Durch die explizite Eingabe einer entsprechenden bestätigenden Zeichenkette mittels des obig beschriebenen Verfahrens wäre es möglich, einen Kommunikationsaustausch zu autorisieren.

Ein weiteres Szenario wäre zum Beispiel, dass das Dokument wiederum über eine Nahfeld-Kommunikationsschnittstelle mit einem Lesegerät in Verbindung steht. Das Lesegerät könnte nun zur Ermöglichung einer gegenseitigen Kopplung erfordern, dass eine am Lesegerät angezeigte Zeichenkette durch das Dokument bestätigend an das Lesegerät zurück übermittelt wird. Ein Benutzer des Dokuments könnte durch Verwendung des obig beschriebenen Verfahrens und Verwendung des allgemeinen Alphabets als der Zeichenmenge nach und nach die einzelnen Zeichen (alphanumerisch) der am Lesegerät angezeigten Zeichenkette angeben und damit eine Übermittlung der Zeichenkette an das Lesegerät durch eine entsprechende Eingabe am Dokument initiieren.

Nach einer Ausführungsform der Erfindung umfasst das Verarbeiten der Zeichenkette einen Vergleich der Zeichenkette mit einem vordefinierten Geheimnis um das Freischalten einer geschützten Funktion des Dokuments, wenn die Zeichenkette mit dem Geheimnis übereinstimmt. Beispielsweise könnte mittels dieser Schritte ein Passwort oder eine PIN in das Dokument eingegeben werden, mittels welcher eine geschützte Funktion des Dokuments, wie beispielsweise eine Signaturfunktion, eine Verschlüsselungsfunktion oder gar ein Zugriff auf in dem Dokument gespeicherten Daten freigeschaltet wird.

Gemäß der Erfindung umfasst die erste und/oder zweite Eingabe eine vordefinierte Bewegung des Dokuments und/oder das Überführen und Halten des Dokuments in einer vordefinierten Lage.

Damit könnte es möglich sein, das Anzeigeverhalten der Zeichen der Zeichenmenge in der Anzeigevorrichtung in einfacher Weise zu steuern. Insbesondere ist hiermit ein einhändiger Bedienvorgang einfach durchführbar. Durch entsprechendes Halten, Kippen oder Bewegen des Dokuments ist es möglich, durch die Zeichenmenge "durchzuscrollen".

Nach einer Ausführungsform der Erfindung umfasst das Mittel zum Empfang der ersten und/oder zweiten Eingabe einen Bewegungssensor und/oder einen Lagesensor des Dokuments. Beispielsweise ist umfasst der Bewegungssensor einen Inertialsensor und/oder umfasst der Lagesensor ein Magnetometer des Dokuments.

Nach einer Ausführungsform der Erfindung umfasst der Bewegungssensor und/oder der Lagesensor zumindest eine Antenne, wobei das Prozessormittel dazu ausgebildet ist, die Bewegung des Dokuments und/oder das Überführen oder Halten des Dokuments in einer vordefinierten Lage aufgrund einer in der Antenne induzierten Antennenspannung zu detektieren. Zum Beispiel könnte die Bewegung des Dokuments und/oder das Überführen oder Halten des Dokuments in einer vordefinierten Lage aus dem zeitlichen Verlauf der aufgrund einer elektromagnetischen Feldstärke in der Antenne induzierten Antennenspannung detektiert werden. Hierzu müsste sich das Dokument in einem entsprechenden elektromagnetischen Feld befinden. Vorzugsweise kommt im Rahmen der gesamten Beschreibung eine kontaktlose Chipkarte ohne eingebauter Stromversorgung in Form einer Batterie zum Einsatz. Mittels einer integrierten Antenne kann ein elektromagnetisches Feld zur Stromerzeugung und damit zum Bestromen und Betreiben des Dokuments (dessen elektrischer Komponenten) verwendet werden. Die in diesem Fall ohnehin notwendige Antenne kann also zusätzlich der Funktion zugeführt werden, durch Überwachung der induzierten Antennenspannung auch gleichzeitig zum Empfang der ersten Eingabe verwendet werden.

In einer verfeinerten Form könnte es möglich sein, durch Anbringen einer Mehrzahl von Antennen am Dokument und der Detektion der individuell in diesen Antennen induzierten Antennenspannung in präziserer Weise die Bewegung und Lage des Dokuments zu bestimmen. Im Falle eines rechteckigen Dokuments könnte es genügen, drei unabhängige Antennen an drei Eckbereichen des Dokuments unterzubringen. Dadurch müsste es möglich sein, aus den individuell induzierten Antennenspannungen dieser drei Antennen eine exakte Lageposition und einen exakten Bewegungsverlauf des Dokuments zu detektieren.

Gemäß der Erfindung umfasst das Mittel zum Empfang der ersten und/oder der zweiten Eingabe eine Kommunikationsschnittstelle zu einem mobilen Telekommunikationsgerät, wobei die Kommunikationsschnittstelle dazu ausgebildet ist, eine durch das Telekommunikationsgerät erfasste Bewegung oder Lage des Dokuments als die erste und/oder zweite Eingabe zu empfangen. Beispielsweise könnte der in einem Mobiltelefon integrierte Lagesensor unter Verwendung einer auf dem Mobiltelefon ausgeführten Applikation die aktuelle Lage des Mobiltelefons detektieren. Wird zu diesem Zeitpunkt das Dokument an das Mobiltelefon angelegt, entspricht damit die Lage des Mobiltelefons im Wesentlichen der Lage des Dokuments. Die Applikation des Mobiltelefons kann die aktuelle Lage oder Bewegung des Mobiltelefons an das Dokument übermitteln.

In diesem Fall könnte es sich bei der Kommunikationsschnittstelle um eine Nahfeld-Schnittstelle handeln, insbesondere in Form einer Antenne. Diese Antenne dient damit zum Empfang von Lageinformationen vom mobilen Telekommunikationsgerät. Eine weitere im Dokument vorgesehene Antenne könnte zur reinen Erzeugung einer induzierten Antennenspannung dienen, um eine Bestromung und damit einen Betrieb der elektrischen Komponenten des Dokuments zu ermöglichen.

Nach einer weiteren Ausführungsform der Erfindung umfasst das Mittel zum Empfang der ersten und/oder zweiten Eingabe ein berührungsempfindliches Eingabefeld des Dokuments, wobei die erste und/oder zweite Eingabe eine Berührung des Eingabefelds durch einen Benutzer umfasst. Beispielsweise weist das Eingabefeld einen mechanischen Schalter und/oder einen kapazitiven Sensor und/oder einen resistiven Sensor und/oder einen Drucksensor und/oder einen Fotosensor zur Erfassung der Berührung auf. Die Verwendung eines Eingabefeldes könnte den Vorteil haben, dass ein Benutzer in gewohnter Weise bewusst durch beispielsweise Berühren des Eingabefeldes mit seinem Finger die erste und/oder zweite Eingabe tätigen kann. Dies könnte insbesondere für ältere Benutzer, welche aufgrund von Zitterbewegungen Probleme mit einer sauber definierten Bewegung des Dokuments haben könnten, eine erhebliche Vereinfachung zum Tätigen der ersten und/oder zweiten Eingabe darstellen.

Nach einer Ausführungsform der Erfindung weist das Eingabefeld eine Antenne auf, wobei das Prozessormittel dazu ausgebildet ist, die Berührung des Eingabefelds aufgrund einer Veränderung einer in der Antenne induzierten Antennenspannung zu detektieren. Auch hier könnte, wie obig beschrieben, entweder die Antenne zum Einsatz kommen, welche auch zur Bestromung der elektrischen Komponenten des Dokuments verwendet wird. Alternativ könnten eine oder mehrere hiervon separate Antennen Verwendung finden. Im berührungsfreien Zustand kann das elektromagnetische Feld ohne Dämpfung die Antennenspannung induzieren. Sobald jedoch ein Benutzer das Eingabefeld mit der Antenne berührt, führt dies zum einen zu einer Verstimmung der Antenne und zum anderen zu einer Abschwächung des elektromagnetischen Feldes. Eine solche Veränderung der entsprechend induzierten Antennenspannung kann daraufhin zur Detektion der ersten und/oder zweiten Eingabe verwendet werden.

Nach einer Ausführungsform der Erfindung beträgt die Anzahl der gleichzeitig anzuzeigenden Zeichen 1. Beispielsweise handelt es sich bei der Anzeigevorrichtung um eine Mehrsegmentanzeige, insbesondere um eine 7-Segment-Anzeige. Eine solche 7-Segment-Anzeige ist normalerweise nur in der Lage, ein einzelnes Zeichen gleichzeitig darzustellen. Durch das obig beschriebene Verfahren, welches das Prozessormittel durchführt, ist es möglich, auch in einfach bedienbarer Weise die Darstellungsfunktion der Anzeigevorrichtung zu erweitern, sodass mehrere Zeichen einer gesamten Zeichenfolge nacheinander angezeigt werden können.

Nach einer Ausführungsform der Erfindung umfasst der erste Teil der Zeichen und der zweite Teil der Zeichen Fragmente der Zeichen der Zeichenmenge, wobei sich der erste und der zweite Teil der Fragmente überlappen oder wobei in einem Zeichen der zweiten Teil eines Fragments geometrisch unmittelbar an den ersten Teil eines Fragments angrenzt. Damit könnte beispielsweise im Falle einer LED-Zeile mit mehreren, übereinander oder nebeneinander angeordneten individuellen LEDs auch ein komplexes Zeichen angezeigt werden, welches aus mehr als nur einer linearen Anordnung von Bildpunkten besteht. Bildlich gesprochen wird das Zeichen gemäß den obig beschriebenen Schritten durch die LED-Zeile "durchgeschoben".

Nach einer Ausführungsform der Erfindung ist das Prozessormittel dazu ausgebildet, nach dem Empfang der ersten Eingabe und dem Ersetzen der Anzeige des ersten Teils der Zeichen durch die Anzeige des zweiten Teils der Zeichen in einer vordefinierten Geschwindigkeit
a) den zweiten Teil der Zeichen als den ersten Teil der Zeichen zu definieren und
b) die gleichzeitige Anzeige dieses nun ersten Teils der Zeichen durch die gleichzeitige Anzeige eines neuen zweiten Teils der Zeichen der Zeichenmenge zu ersetzen,
c) die Schritte a) und b) kontinuierlich zu wiederholen.

Damit könnte es möglich sein, in einem Art Laufschrifteffekt mehrere Zeichen oder Zeichenfragmente durch die Anzeigevorrichtung "durchzuschieben". Durch die Trägheit des menschlichen Auges kann jedoch ein Nutzer des Dokuments einen gesamten Text während dem Durchschieben erkennen.

In einem weiteren Aspekt betrifft die Erfindung ein Verfahren zur Steuerung einer integrierten Anzeigevorrichtung eines Dokuments, wobei das Dokument ein erstes Mittel zum Empfang einer ersten Eingabe und ein Prozessormittel aufweist, wobei die Anzeigevorrichtung dazu ausgebildet ist, eine beschränkte Anzahl von Zeichen einer Zeichenmenge gleichzeitig anzuzeigen, wobei das durch das Prozessormittel ausgeführte Verfahren zum Ansteuern der Anzeigevorrichtung umfasst:
- gleichzeitige Anzeige eines ersten Teils der Zeichen der Zeichenmenge,
- nach Empfang der ersten Eingabe, Ersetzen mit gleichzeitiger Anzeige des ersten Teils der Zeichen durch Anzeige eines zweiten Teils der Zeichenmenge, wobei der zweite Teil von dem ersten Teil zumindest teilweise verschieden ist

In einem weiteren Aspekt betrifft die Erfindung ein Computerprogrammprodukt mit von einem Prozessor ausführbaren Instruktionen zur Durchführung des obig beschriebenen Verfahrens.

In einem weiteren Aspekt betrifft die Erfindung ein elektronisches System mit einem Dokument nach einem der vorhergehenden Ansprüche und mit einem Lesegerät für das Dokument, wobei das Lesegerät zur Erzeugung des elektromagnetischen Feldes ausgebildet ist.

Es sei angemerkt, dass im Rahmen der gesamten Beschreibung unter einem Zeichen ein Zeichen des alphanumerischen Zeichenalphabets in beliebiger Sprache, inklusive Sonderzeichen und Grafiken, Portraits und Bilder, verstanden wird.

Ferner sei angemerkt, dass die obig beschriebenen Ausführungsformen der Erfindung in beliebiger Weise miteinander kombiniert werden können, solange sich die kombinierten Ausführungsformen nicht gegenseitig ausschließen.

Im Folgenden werden Ausführungsformen der Erfindung anhand der folgenden Zeichnungen näher erläutert. Es zeigen:
- Figur 1: eine Ansicht eines Dokuments mit Anzeigevorrichtung,
- Figur 2: ein Dokument mit einer 7-Segment-Anzeigevorrichtung,
- Figur 3: ein Dokument mit einer 8-LED-Zeile,
- Figur 4: ein Dokument mit 7-Segment-Anzeige und Swipe-Sensor,
- Figur 5: eine schematische Darstellung einer Nutzung eines virtuellen Displays bei der Eingabe eines Passworts,
- Figur 6: eine schematische Nutzung eines virtuellen Displays bei der Eingabe eines Passworts.

Im Folgenden werden einander ähnliche Elemente mit den gleichen Bezugszeichen gekennzeichnet.

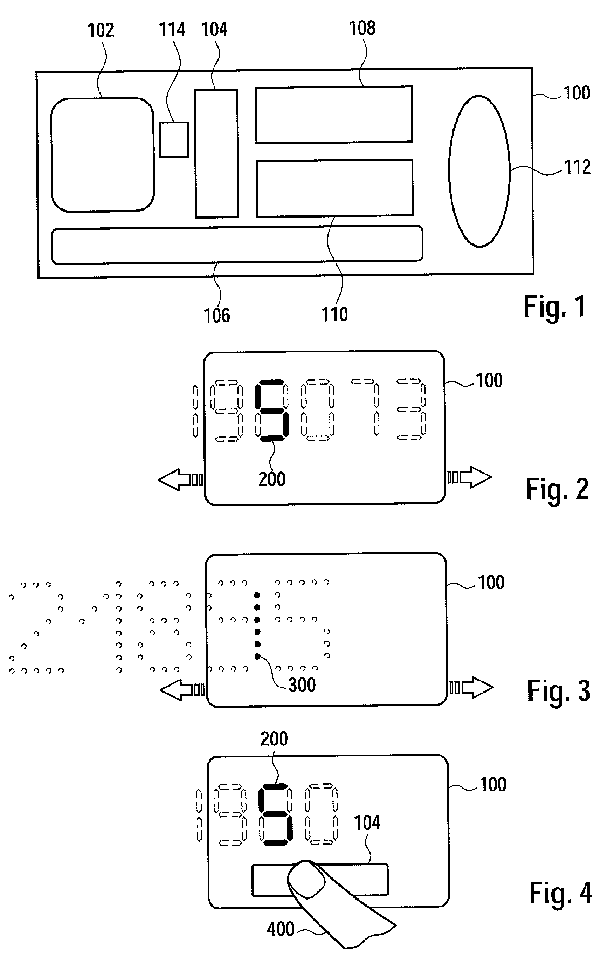

Die Figur 1 zeigt ein Dokument 100 mit einer integrierten Anzeigevorrichtung 102. Ein Speicher 110 des Dokuments kann Instruktionen speichern, welche durch einen Prozessor 108 des Dokuments 100 ausgeführt werden können. Ferner können im Speicher Daten gespeichert sein, welche als sicherheitskritisch einzustufen sind. Beispielsweise könnte es sich bei diesen Daten um persönliche Daten des Benutzers des Dokuments 100, wie beispielsweise Bankdaten, handeln.

Ferner weist das Dokument 100 eine Antenne 106 auf. In dieser Antenne kann eine Antennenspannung aufgrund eines externen elektromagnetischen Wechselfeldes induziert werden. Diese Antennenspannung kann daraufhin zur Bestromung des Prozessors 108 und zum elektrischen Betrieb des Dokuments 100 verwendet werden.

Eine weitere Antenne 112 kann zur Nahfeld-Kommunikation mit einem entsprechenden Lesegerät verwendet werden. Diese Antenne 112 ermöglicht einen Datenaustausch zwischen Dokument 100 und einem in Figur 1 nicht näher dargestellten Lesegerät.

Da der zur Verfügung stehende Platz für eine entsprechende Anzeigevorrichtung 102 auf einem Dokument 100, wie beispielsweise einer Chipkarte oder einem Ausweisdokument, stark begrenzt ist, ist es insbesondere nur schwer möglich, längere Zeichenketten durch eine solche Anzeigevorrichtung 102 darzustellen. Zwar könnten die Zeichenketten in verkleinerter Form durch die Anzeigevorrichtung 102 dargestellt werden. Dies würde jedoch die Lesbarkeit der Zeichenkette deutlich verschlechtern.

In der Figur 2 ist nun ein Dokument 100 mit einer Anzeigevorrichtung 200 in Form einer einzelnen 7-Segment-Anzeige gezeigt. Diese 7-Segment-Anzeige ist in der Lage, eine einzelne Zahl zwischen 0 und 9 gleichzeitig darzustellen. Sichtbar ist also in dem Beispiel der Figur 2 im Augenblick des Betrachtens für den Benutzer lediglich die Zahl 5, wohingegen die Zahlen 1, 9, 0, 7 und 3 lediglich schematisch zum Verständnis der vorliegenden Beschreibung skizziert sind. Um nun die gesamte Zeichenkette 195073 dem Benutzer des Dokuments 100 sichtbar zu machen, wird zunächst lediglich ein erster Teil der Zahlen der Zeichenmenge 0 bis 9 gleichzeitig dargestellt, im vorliegenden Beispiel die Zahl 5. Ein zweiter Teil der Zahlen, im vorliegenden Fall die Zahl 9 oder die Zahl 0 kann nach Empfang einer entsprechenden Eingabe die Zahl 5 ersetzen. Denn bei der Ziffernfolge 195073 handelt es sich um aufeinanderfolgende Zeichen einer Zeichensequenz, wobei alle Zeichen dieser Zeichensequenz unmittelbar aufeinanderfolgen. So folgt die 0 unmittelbar auf die 5 und die 9 folgt unmittelbar auf die 5.

Das Dokument 100 der Figur 2 weist einen Bewegungssensor 104 auf, welcher der Einfachheit halber lediglich in der schematischen Übersicht der Figur 1 dargestellt ist. Der Bewegungssensor ist beispielsweise ein Inertialsensor, welcher eine Bewegung des Dokuments 100 nach links oder rechts als solche erfassen kann. Wird nun im Beispiel der Figur 2 das Dokument 100 nach links bewegt, so wird diese Bewegung nach links als eine Eingabe erfasst und die Anzeigevorrichtung 200 wird so angesteuert, dass nun statt der 5 die 9 angezeigt wird. Analog ist es möglich, durch Bewegen des Dokuments 100 nach rechts die 5 durch die 0 zu ersetzen. Durch eine sukzessive Ausführung der Bewegungen nach links bzw. rechts ist es somit möglich, mittels einer einzelnen 7-Segment-Anzeige, welche eigentlich nur ein einzelnes Zeichen gleichzeitig darstellen kann, eine komplette Zeichenkette für den Benutzer sichtbar zu machen.

Möglich ist es auch, dass es sich bei dem Sensor 104 um einen Lagesensor, wie beispielsweise ein Magnetometer handelt. In diesem Fall würde es genügen, das Dokument 100 leicht nach links oder nach rechts zu kippen, sodass daraufhin nacheinander die verschiedenen Zahlen über die 7-Segment-Anzeige laufen und nacheinander angezeigt werden. Durch Wahl einer geeigneten Bewegungsgeschwindigkeit kann aufgrund der Trägheit des menschlichen Auges der Benutzer die gesamte Ziffernfolge erfassen.

Durch Nutzung des Sensors 104 kann sich also der Nutzer durch das gesamte virtuelle Display bewegen, wobei die einzelnen Ziffern der Ziffernfolge entsprechend nacheinander angezeigt werden. Dabei gilt allgemein, dass in Abhängigkeit von der Bewegungsgeschwindigkeit und/oder der Beschleunigung des Dokuments die Anfangsgeschwindigkeit einer über die Anzeigevorrichtung dargestellten Laufschrift eingestellt werden kann. Diese kann dann abhängig von der Zeit abnehmen.

Die Figur 3 zeigt eine weitere schematische Ansicht eines Dokuments 100, wobei jedoch nun anstatt einer 7-Segment-Anzeige eine 8-LED-Zeile 300 als Anzeigevorrichtung verwendet wird. Eine 8-LED-Anzeige ist lediglich in der Lage, mittels einer vertikal gestapelten Anordnung von LEDs oder allgemein von Anzeigeelementen ein Teilfragment eines Zeichens gleichzeitig darzustellen. Durch Zerlegen eines jeden Zeichens in eine Mehrzahl von Teilfragmenten ist es jedoch nun wieder mittels der obig beschriebenen Vorgehensweise möglich, durch Bewegen oder Kippen des Dokuments 100 nach links oder rechts durch die dargestellte Ziffernfolge 21895 zu "scrollen". Durch eine Bewegung der Karte kann der Benutzer die gesamte Information des virtuellen Displays sichtbar machen. Durch eine geeignete Bewegung der Karte lässt sich somit eine komplette Matrixanzeige simulieren. In dem Beispiel der Figur 3 könnte durch eine Zerlegung eines einzelnen Zeichens in jeweils fünf Teilfragmente und dem nacheinander Darstellen der aufeinanderfolgenden Teile der Teilfragmente die Visualisierung kompletter Zeichen und kompletter Zeichenketten ermöglicht werden. Nachdem nämlich die einzelnen Teilfragmente eines Zeichens nacheinander dargestellt wurden, erfolgt anschließend das nacheinander darstellen der nächsten Teilfragmente des Zeichens, welches dem aktuellen Zeichen nachfolgt oder vorangeht (je nach Bewegungsrichtung).

Die Figur 4 zeigt eine Variante eines Dokuments 100, wobei hier anstatt eines Bewegungs- oder Lagesensors ein berührungsempfindlicher Swipe-Sensor 104 zum Einsatz kommt. Durch Bewegen eines Fingers 400 eines Benutzers über diesen Swipe-Sensor kann wiederum eine Zeichenfolge (Ziffern 1950) durch die 7-Segment-Anzeige 200 durchgezogen werden. Beim Bewegen des Fingers 400 von links nach rechts oder umgekehrt kann also in kontrollierter Weise jede einzelne Zahl der besagten Zeichenfolge in der Anzeigevorrichtung 200 sichtbar gemacht werden.

Abhängig vom Neigungswinkel des Dokuments 100 kann damit eine Laufschrift in der jeweiligen Richtung dargestellt werden. Die Laufgeschwindigkeit kann auch vom Laufwinkel abhängen und kann auf einen maximalen Wert begrenzt werden.

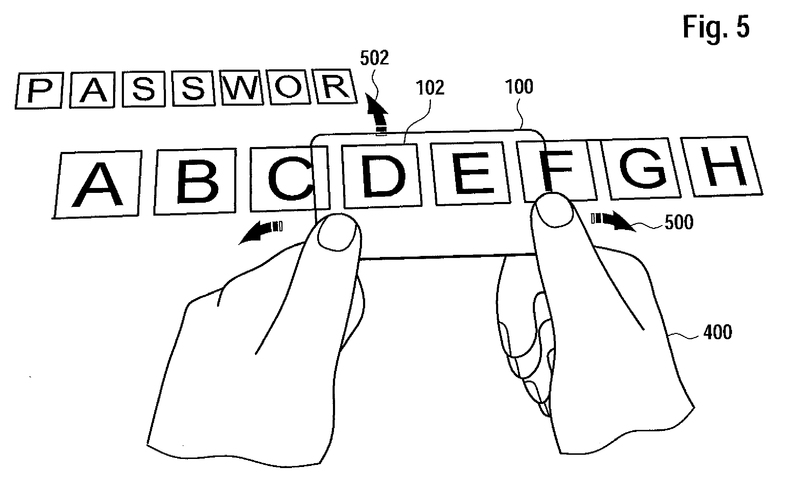

Neben einer Anzeigevorrichtung kann ein Dokument 100 auch ein entsprechendes Eingabe-Interface aufweisen. Ein solches Eingabe-Interface ist in Figur 1 mit dem Bezugszeichen 114 gekennzeichnet und kann dazu verwendet werden, ein gegenwärtig durch die Anzeigevorrichtung 102 dargestelltes Zeichen zu bestätigen. Wird dies für eine Mehrzahl von verschiedenen dargestellten Zeichen nacheinander gemacht, ergibt sich somit die Möglichkeit, aus einem alphanumerischen Zeichenalphabet verschiedene Zeichen aneinander zu reihen und als Eingabe dem Dokument 100 zu übermitteln. Dies ist beispielhaft in der Figur 5 gezeigt.

Figur 5 zeigt ein virtuelles Display zur allgemeinen Benutzereingabe - hier die Zeichenfolge "PASSWORD". Durch Kippbewegungen nach links bzw. rechts wird durch die verfügbare eindimensionale Buchstabenfolge navigiert. Durch eine Kippbewegung nach vorne wird das aktuell im Display dargestellte Zeichen ausgewählt, eine Kippbewegung nach hinten könnte z.B. das letzte ausgewählte Zeichen löschen.

Ein Benutzer kann hier durch eine Kippbewegung seiner Hand das Dokument nach links und rechts kippen, das heißt, in Richtung und entgegen der Richtung 500. Durch diese Kippbewegungen nach links bzw. rechts wird durch die verfügbare eindimensionale Buchstabenfolge navigiert und jeweils ein aktueller Buchstabe auf der Anzeigevorrichtung 102 dargestellt. Möchte der Benutzer beispielsweise die Zeichenfolge "PASSWORD" - ein Passwort oder eine PIN - in das Dokument zum Freischalten eines Zugriffs auf die im Speicher 110 gespeicherten persönlichen Daten eingeben, so könnte er die Karte in der obig beschriebenen Weise bewegen, bis ein entsprechend gesuchtes Zeichen angezeigt wird. Durch eine Kippbewegung nach vorne in Richtung 502 wird das aktuell dargestellte Zeichen ausgewählt, eine Kippbewegung nach hinten könnte z.B. das letzte ausgewählte Zeichen löschen.

Es sei an dieser Stelle angemerkt, dass es für sämtliche beschriebenen Beispiele notwendig ist, dass sich das Dokument 100 permanent während des gesamten Verwendungsprozess innerhalb jenes elektromagnetischen Feldes befindet, mittels welchem die Antennenspannung in der Antenne 106 zum Betreiben der elektrischen Komponenten des Dokuments 100 induziert wird.

Um dies zu vereinfachen könnte es, wie bereits oben beschrieben, möglich sein, das Dokument 100 ohne eigene Sensorik, jedoch mit einer zusätzlichen Antenne, wie beispielsweise der Antenne 112, auszustatten. Über ein Mobiltelefon, an welches das Dokument 100 gehalten wird, kann über eine Nahfeld-Kommunikation, wie beispielsweise die NFC-Schnittstelle, die aktuelle Lageposition des Mobiltelefons über die Antenne 112 dem Prozessormittel 108 mitgeteilt werden. Denn in diesem Fall entspricht die Bewegung des Mobiltelefons der Bewegung des Dokuments. Somit kann das Mobiltelefon über die Antenne 106 das Dokument mit elektrischer Energie versorgen und gleichzeitig über die Antenne 112 eine Detektion von Bewegungen des Mobiltelefons an das Dokument 100 übermitteln. Das Mobiltelefon sendet in diesem Fall die Daten seines eigenen, beispielsweise Inertialsensors, an das Dokument 100.

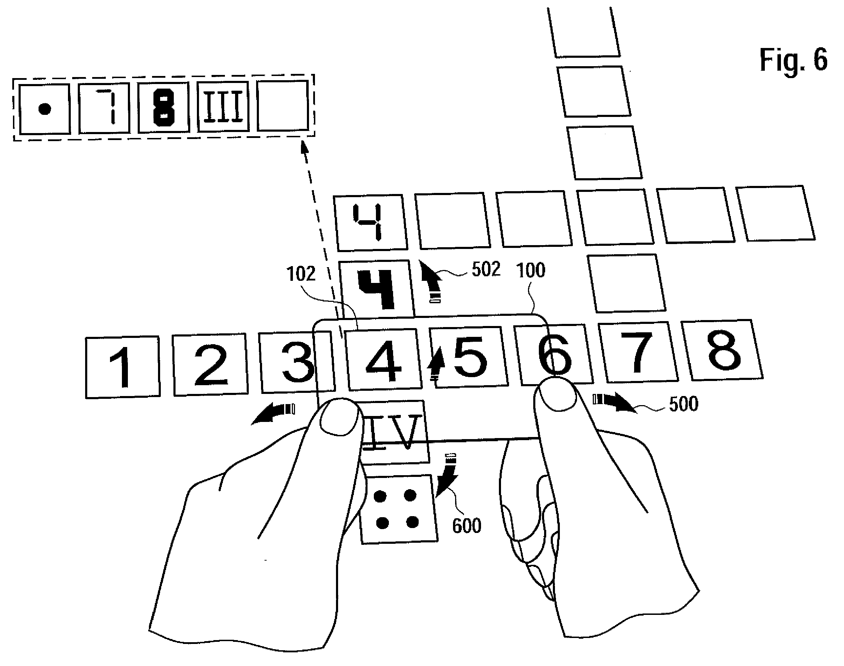

Die Figur 6 zeigt eine weitere Variante der Verwendung eines Dokuments 100. Im Gegensatz zu dem in Figur 5 verwendeten Zeichenalphabet ist das in Figur 6 verwendete Zeichenalphabet wesentlich komplexer, da einzelne Zahlen sowohl in römischer Schreibweise als auch in arabischer Schreibweise und in weiteren sonstigen denkbaren Schreibweisen durch die Anzeigevorrichtung dargestellt werden können. Dies ermöglicht eine Benutzereingabe von Passworten oder PINs, basierend auf einer Symbolbibliothek (hier Ziffern in unterschiedlichen Darstellungsformen). Beispielsweise wird durch Kippbewegungen 500 nach links bzw. rechts durch die verfügbare Ziffernfolge navigiert. Durch eine Kippbewegung nach vorne (502) bzw. hinten (600) wird in der zweiten Dimension die Darstellungsform der im Display angezeigten Ziffer ausgewählt.

Mittels Beschleunigen der Karte in Richtung zum Benutzer wird das dargestellte Zeichen ausgewählt, mittels Beschleunigen der Karte in Richtung weg vom Benutzer wird das letztgewählte Zeichen gelöscht.

In einer Variante ermöglicht dies sogar, auf dem Dokument das zu einer Benutzerautorisierung mögliche gesamte Zeichenalphabet, zum Beispiel numerische Ziffern und/oder Buchstaben und/oder Sonderzeichen und/oder Grafiken und/oder Portraits und/oder Bilder, zu speichern. Möglich ist allgemein, dass die dargestellten Zeichen Teile eines sogenannten grafischen Passworts sind. Ein grafisches Passwort ist dabei ein Geheimnis, welches der Benutzer und das Dokument teilen. Hiermit kann sich ein Benutzer gegenüber dem Dokument authentisieren. Ein grafisches Passwort besteht dabei aus einer festgelegten Sequenz von Zeichen. Gibt der Benutzer das Geheimnis über das virtuelle Display richtig ein, hat er sich authentisiert. Ein grafisches Passwort unterscheidet sich von einem normalen Passwort oder einem normalen PIN durch die Möglichkeit der Verwendung von Bildern oder Grafiken. Grundsätzlich kann sich ein Mensch Grafiken und Bilder besser merken als alphanumerische Zeichen. Dies macht die Verwendung eines grafischen Alphabets für eine Benutzerauthentisierung sehr effizient.

An dieser Stelle sei angemerkt, dass durch das beschriebene Verfahren der Eingabe einzelner Zeichen in das Dokument auch eine Personalisierung des Dokuments mittels eines selbst gewählten Passworts möglich ist. In einer Personalisierungsphase kann damit der Benutzer sein Passwort, insbesondere sein grafisches Passwort zur Authentisierung, festlegen. Da hierzu kein spezielles Lesegerät oder Programmiergerät notwendig ist, kann somit eine entsprechende Programmierung oder gar Umprogrammierung jederzeit in einfacher Weise stattfinden. Idealerweise hält hierzu der Benutzer lediglich sein Dokument an ein NFC-fähiges Mobiltelefon, wobei das NFC-fähige Mobiltelefon zur Bestromung des Dokuments 100 herangezogen wird.

Im Falle dessen die beschriebene Anzeigevorrichtung über eine ausreichend hohe Auflösung verfügt, ist es möglich, nahezu beliebige Bilder darzustellen. Varianten sind hierbei die Nutzung stark verfremdeter Bilder zur Erhöhung der Sicherheit, da nur der Nutzer, der die Originale gesehen hat, diese leicht wiedererkennen kann und in entsprechender Weise auch als Passwort bei einer Passwortcodierung sich merken kann.

### Bezugszeichenliste ----------------------------------

- 100: Dokument
- 102: Anzeigevorrichtung
- 104: Sensor
- 106: Antenne
- 108: Prozessor
- 110: Speicher
- 112: Antenne
- 200: 7-Segment-Anzeige
- 300: LED-Anzeige
- 400: Finger
- 500: Richtung
- 502: Richtung
- 600: Richtung

## Patentansprüche

1. Dokument (100) mit einer integrierten Anzeigevorrichtung (102; 200; 300), einem Mittel (104) zum Empfang einer ersten Eingabe und einem Prozessormittel (108), wobei die Anzeigevorrichtung (102; 200; 300) dazu ausgebildet ist, eine beschränkte Anzahl von Zeichen einer Zeichenmenge gleichzeitig anzuzeigen, wobei das Prozessormittel (108) dazu ausgebildet ist, die Anzeigevorrichtung (102; 200; 300) anzusteuern zum:
- gleichzeitigen Anzeigen eines ersten Teils der Zeichen der Zeichenmenge,
- nach Empfang der ersten Eingabe, Ersetzen der gleichzeitigen Anzeige des ersten Teils der Zeichen durch Anzeige eines zweiten Teils der Zeichen der Zeichenmenge, wobei der zweite Teil von dem ersten Teil zumindest teilweise verschieden ist,
wobei die erste Eingabe eine vordefinierte Bewegung des Dokuments (100) und/oder das Überführen oder Halten des Dokuments (100) in einer vordefinierten Lage umfasst,
**dadurch gekennzeichnet, dass** das Mittel zum Empfang der ersten Eingabe eine Kommunikationsschnittstelle zu einem mobilen Telekommunikationsgerät umfasst, wobei die Kommunikationsschnittstelle (112) dazu ausgebildet ist, eine durch das Telekommunikationsgerät erfasste Bewegung oder Lage des Dokuments (100) als die erste Eingabe zu empfangen.

2. Dokument (100) nach Anspruch 1, wobei es sich bei der Zeichenmenge um eine Zeichensequenz handelt, wobei es sich bei dem ersten Teil und bei dem zweiten Teil um aufeinanderfolgende Zeichen der Zeichensequenz handelt, wobei sich der erste und der zweite Teil überlappen oder wobei in der Zeichensequenz der zweite Teil unmittelbar auf den ersten Teil folgt.

3. Dokument (100) nach Anspruch 1 oder 2, ferner mit einem Mittel (114) zur Erfassung einer zweiten Eingabe zur Bestätigung des aktuell durch die Anzeigevorrichtung (102; 200; 300) angezeigten Teils der Zeichen, wobei durch die zweite Eingabe ein bestätigter Zeichenteil erhältlich ist.

4. Dokument (100) nach Anspruch 3, wobei das Prozessormittel (108) dazu ausgebildet ist zum
- Empfang einer Anzahl der bestätigten Zeichenteile in einer Reihenfolge, wobei sich aus der Reihenfolge der bestätigten Zeichenteile eine Zeichenkette ergibt,
- Verarbeitung der Zeichenkette.

5. Dokument (100) nach Anspruch 4, wobei das Verarbeiten der Zeichenkette umfasst:
- Vergleich der Zeichenkette mit einem vordefinierten Geheimnis,
- Freischalten einer geschützten Funktion des Dokuments (100), wenn die Zeichenkette mit dem Geheimnis übereinstimmt.

6. Dokument (100) nach einem der vorigen Ansprüche 3-5, wobei die zweite Eingabe eine vordefinierte Bewegung des Dokuments (100) und/oder das Überführen oder Halten des Dokuments (100) in einer vordefinierten Lage umfasst.

7. Dokument (100) nach Anspruch 6, wobei ein Mittel (104) zum Empfang der zweiten Eingabe einen Bewegungssensor und/oder einen Lagesensor des Dokuments (100) umfasst.

8. Dokument (100) nach Anspruch 7, wobei der Bewegungssensor einen Inertialsensor des Dokuments (100) umfasst und/oder wobei der Lagesensor ein Magnetometer des Dokuments (100) umfasst.

9. Dokument (100) nach Anspruch 7 oder 8, wobei der Bewegungssensor und/oder der Lagesensor zumindest eine Antenne umfasst, wobei das Prozessormittel (108) dazu ausgebildet ist, die Bewegung des Dokuments (100) und/oder das Überführen oder Halten des Dokuments (100) in einer vordefinierten Lage aufgrund einer in der Antenne induzierten Antennenspannung zu detektieren.

10. Dokument (100) nach Anspruch 9, wobei die Bewegung des Dokuments (100) und/oder das Überführen oder Halten des Dokuments (100) in einer vordefinierten Lage aus dem zeitlichen Verlauf der aufgrund einer elektromagnetischen Feldstärke in der Antenne induzierten Antennenspannung detektierbar ist.

11. Dokument (100) nach Anspruch 6, wobei ein Mittel zum Empfang der zweiten Eingabe eine Kommunikationsschnittstelle zu einem mobilen Telekommunikationsgerät umfasst, wobei die Kommunikationsschnittstelle (112) dazu ausgebildet ist, eine durch das Telekommunikationsgerät erfasste Bewegung oder Lage des Dokuments (100) als die zweite Eingabe zu empfangen.

12. Dokument (100) nach einem der vorigen Ansprüche, wobei das Mittel zum Empfang der ersten und/oder zweiten Eingabe ein berührungsempfindliches Eingabefeld (114) des Dokuments (100) umfasst, wobei die erste und/oder zweite Eingabe eine Berührung des Eingabefeldes (114) durch einen Benutzer umfasst.

13. Dokument (100) nach Anspruch 12, wobei das Eingabefeld einen mechanischen Schalter und/oder einen kapazitiven Sensor und/oder einen resistiven Sensor und/oder einen Drucksensor und/oder einen Photosensor zur Erfassung der Berührung aufweist.

14. Dokument (100) nach Anspruch 12 oder 13, wobei das Eingabefeld eine Antenne aufweist, wobei das Prozessormittel (108) dazu ausgebildet ist, die Berührung des Eingabefeldes aufgrund einer Veränderung einer in der Antenne induzierten Antennenspannung zu detektieren.

15. Dokument (100) nach einem der vorigen Ansprüche, wobei die Anzahl der gleichzeitig anzuzeigenden Zeichen eins beträgt.

16. Dokument (100) nach einem der vorigen Ansprüche, wobei das Prozessormittel (108) dazu ausgebildet ist, nach dem Empfang der ersten Eingabe und dem Ersetzen der Anzeige des ersten Teils der Zeichen durch die Anzeige des zweiten Teils der Zeichen in einer vordefinierten Geschwindigkeit
a) den zweiten Teil der Zeichen als den ersten Teil der Zeichen zu definieren und
b) die gleichzeitige Anzeige dieses nun ersten Teils der Zeichen durch die gleichzeitige Anzeige eines neuen zweiten Teils der Zeichen der Zeichenmenge zu ersetzen,
c) die Schritte a) und b) kontinuierlich zu wiederholen.

17. Dokument (100) nach einem der vorigen Ansprüche, wobei der erste Teil der Zeichen und der zweite Teil der Zeichen Fragmente der Zeichen der Zeichenmenge umfasst, wobei sich der erste und der zweite Teil der Fragmente überlappen oder wobei in einem Zeichen der zweite Teil eines Fragments geometrisch unmittelbar an den ersten Teil eines Fragments angrenzt.

18. Dokument (100) nach Anspruch 17, wobei es sich bei der Anzeigevorrichtung um eine LED-Zeile (300) handelt.

19. Dokument (100) nach einem der vorigen Ansprüche 1-17, wobei es sich bei der Anzeigevorrichtung (102; 200; 300) um eine Mehrsegmentanzeige (200) handelt.

20. Verfahren zur Steuerung einer integrierten Anzeigevorrichtung (102; 200; 300) eines Dokuments (100), wobei das Dokument (100) ein erstes Mittel zum Empfang einer ersten Eingabe und ein Prozessormittel (108) aufweist, wobei die Anzeigevorrichtung (102; 200; 300) dazu ausgebildet ist, eine beschränkte Anzahl von Zeichen einer Zeichenmenge gleichzeitig anzuzeigen, wobei das durch das Prozessormittel (108) ausgeführte Verfahren zum Ansteuern der Anzeigevorrichtung (102; 200; 300) umfasst:
- gleichzeitige Anzeige eines ersten Teils der Zeichen der Zeichenmenge,
- nach Empfang der ersten Eingabe, Ersetzen der gleichzeitigen Anzeige des ersten Teils der Zeichen durch Anzeige eines zweiten Teils der Zeichen der Zeichenmenge, wobei der zweite Teil von dem ersten Teil zumindest teilweise verschieden ist,
wobei die erste Eingabe eine vordefinierte Bewegung des Dokuments (100) und/oder das Überführen oder Halten des Dokuments (100) in einer vordefinierten Lage umfasst,
**dadurch gekennzeichnet, dass** das Mittel zum Empfang der ersten Eingabe eine Kommunikationsschnittstelle zu einem mobilen Telekommunikationsgerät umfasst, wobei die Kommunikationsschnittstelle (112) dazu ausgebildet ist, eine durch das Telekommunikationsgerät erfasste Bewegung oder Lage des Dokuments (100) als die erste Eingabe zu empfangen.

21. Computerprogrammprodukt mit von einem Prozessor ausführbaren Instruktionen zur Durchführung der Verfahrensschritte gemäß Anspruch 20 auf einem Dokument nach einem der Ansprüche 1-19.

22. Elektronisches System mit einem Dokument (100) nach einem der vorhergehenden Ansprüche 1-19 und mit einem Lesegerät für das Dokument (100), wobei das Lesegerät zur Erzeugung eines elektromagnetischen Feldes ausgebildet ist.

## Claims

1. A document (100) having an integrated display device (102; 200; 300), a means (104) for receiving a first input, and a processor means (108), wherein the display device (102; 200; 300) is configured to display a limited number of characters of a character set at the same time, wherein the processor means (108) is configured to control the display device (102; 200; 300) so as to:
- display a first portion of the characters of the character set at the same time,
- following receipt of the first input, replace the simultaneous display of the first portion of the characters with a display of a second portion of the characters of the character set, wherein the second portion is different from the first portion at least in part, wherein the first input comprises a predefined movement of the document (100) and/or the transfer or holding of the document (100) in a predefined position,
**characterised in that**
the means for receiving the first input comprises a communications interface to a mobile telecommunications device, wherein the communications interface (112) is configured to receive, as the first input, a movement or position of the document (100) detected by the telecommunications device.

2. The document (100) according to claim 1, wherein the character set is a character sequence, wherein the first portion and the second portion are successive characters of the character sequence, wherein the first and the second portion overlap, or wherein the second portion directly follows the first portion in the character sequence.

3. The document (100) according to claim 1 or 2, also having a means (114) for detecting a second input for confirming the portion of the characters currently displayed by the display device (102; 200; 300), wherein a confirmed character portion is obtainable by the second input.

4. The document (100) according to claim 3, wherein the processor means (108) is configured to
- receive a number of the confirmed character portions in an order, wherein a character chain results from the order of the confirmed character portions,
- process the character chain.

5. The document (100) according to claim 4, wherein the processing of the character chain comprises:
- comparing the character chain with a predefined secret,
- releasing a protected function of the document (100) when the character chain matches the secret.

6. The document (100) according to any one of the preceding claims 3-5, wherein the second input comprises a predefined movement of the document (100) and/or the transfer or holding of the document (100) in a predefined position.

7. Document (100) according to claim 6, wherein a means (104) for receiving the second input comprises a motion sensor and/or a position sensor of the document (100).

8. The document (100) according to claim 7, wherein the motion sensor comprises an inertial sensor of the document (100), and/or wherein the position sensor comprises a magnetometer of the document (100).

9. The document (100) according to claim 7 or 8, wherein the motion sensor and/or the position sensor comprises at least one antenna, wherein the processor means (108) is configured to detect the movement of the document (100) and/or the transfer or holding of the document (100) in a predefined position on the basis of an antenna voltage induced in the antenna.

10. The document (100) according to claim 9, wherein the movement of the document (100) and/or the transfer or holding of the document (100) in a predefined position can be detected from the temporal course of the antenna voltage induced on account of an electromagnetic field strength in the antenna.

11. The document (100) according to claim 6, wherein a means for receiving the second input comprises a communications interface to a mobile telecommunications device, wherein the communications interface (112) is configured to receive, as the second input, a movement or position of the document (100) detected by the telecommunications device.

12. The document (100) according to any one of the preceding claims, wherein the means for receiving the first and/or second input comprises a touch-sensitive input field (114) of the document (100), wherein the first and/or second input comprises a touching of the input field (114) by a user.

13. The document (100) according to claim 12, wherein the input field has a mechanical switch and/or a capacitive sensor and/or a resistive sensor and/or a pressure sensor and/or a photo sensor for detecting the touching.

14. The document (100) according to claim 12 or 13, wherein the input field has an antenna, wherein the processor means (108) is configured to detect the touching of the input field on the basis of a change to an antenna voltage induced in the antenna.

15. The document (100) according to any one of the preceding claims, wherein the number of the characters to be displayed at the same time is one.

16. The document (100) according to any one of the preceding claims, wherein the processor means (108) is configured, following the receipt of the first input and the replacement of the display of the first portion of the characters by a display of the second portion of the characters, at a predefined speed,
a) to define the second portion of the characters as the first portion of the characters and
b) to replace the simultaneous display of this now first portion of the characters by the simultaneous display of a new second portion of the characters of the character set,
c) to continuously repeat steps a) and b).

17. The document (100) according to any one of the preceding claims, wherein the first portion of the characters and the second portion of the characters comprises fragments of the characters of the character set, wherein the first and second portion of the fragments overlap, or wherein, in a character, the second portion of a fragment geometrically directly borders the first portion of a fragment.

18. The document (100) according to claim 17, wherein the display device is a row of LEDs (300).

19. The document (100) according to any one of the preceding claims 1-17, wherein the display device (102; 200; 300) is a multi-segment display (200).

20. A method for controlling an integrated display device (102; 200; 300) of a document (100), wherein the document (100) has a first means for receiving a first input, and a processor means (108), wherein the display device (102; 200; 300) is configured to display a limited number of characters of a character set at the same time, wherein the method for controlling the display device (102; 200; 300) performed by the processor means (108) comprises:
- simultaneously displaying a first portion of the characters of the character set,
- following receipt of the first input, replacing the simultaneous display of the first portion of the characters by displaying a second portion of the characters of the character set, wherein the second portion is different from the first portion, at least in part,
wherein the first input comprises a predefined movement of the document (100) and/or the transfer or holding of the document (100) in a predefined position,
**characterised in that**
the means for receiving the first input comprises a communications interface to a mobile telecommunications device, wherein the communications interface (112) is configured to receive, as the first input, a movement or position of the document (100) detected by the telecommunications device.

21. A computer program product having instructions, which can be executed by a processor, for carrying out the method steps according to claim 20 on a document according to any one of claims 1-19.

22. An electronic system having a document (100) according to any one of the preceding claims 1-19 and having a reader for the document (100), wherein the reader is configured to generate an electromagnetic field

## Revendications

1. Document (100) avec un dispositif d'affichage (102 ; 200 ; 300) intégré, un moyen (104) pour la réception d'une première saisie et un moyen de processeur (108), où le dispositif d'affichage (102 ; 200 ; 300) est conçu pour afficher simultanément un nombre restreint de caractères parmi un jeu de caractères, où le moyen de processeur (108) est conçu pour commander le dispositif d'affichage (102 ; 200 : 300) pour faire :
- un affichage simultané d'une première partie des caractères parmi le jeu de caractères,
- après la réception de la première saisie, un remplacement des affichages simultanés de la première partie des caractères par un affichage d'une deuxième partie des caractères parmi le jeu de caractères, où la deuxième partie est au moins partiellement différente de la première partie,
où la première saisie comprend un mouvement prédéfini du document (100), et/ou le transfert, ou le maintien du document (100) dans une position prédéfinie,
**caractérisé en ce que**
le moyen pour la réception de la première saisie comprend une interface de communication vers un appareil de télécommunication mobile, où l'interface de communication (112) est conçue pour recevoir un mouvement détecté par l'appareil de télécommunication, ou la position du document (100), en tant que première saisie.

2. Document (100) selon la revendication 1, où dans le cas du jeu de caractères, il s'agit d'une séquence de caractères, où, dans la première partie et dans la deuxième partie, il s'agit de caractères de la séquence de caractères se succédant, où les première et deuxième parties se superposent et où, dans la séquence de caractères, la deuxième partie suit immédiatement la première partie.

3. Document (100) selon la revendication 1, ou 2, comprenant en outre un moyen (114) pour la détection d'une deuxième saisie pour la confirmation de la partie des caractères en cours d'affichage par le dispositif d'affichage (102 ; 200 ; 300), où une partie des caractères confirmées est disponible par la deuxième saisie.

4. Document (100) selon la revendication 3, où le moyen de processeur (108) est conçu pour
- la réception d'un nombre de parties de caractères confirmés dans une suite, où une chaîne de caractères est générée à partir de la suite des parties de caractères confirmés,
- le traitement de la chaîne de caractères.

5. Document (100) selon la revendication 4, où le traitement de la chaîne de caractères comprend :
- une comparaison de la chaîne de caractères avec un secret prédéfini,
- un déblocage d'une fonction du document (100) protégée lorsque la chaîne de caractères concorde avec le secret.

6. Document (100) selon l'une des revendications précédentes 3 à 5, où la deuxième saisie comprend un mouvement prédéfini du document (100), et/ou le transfert, ou le maintien du document (100) dans une position prédéfinie.

7. Document (100) selon la revendication 6, où un moyen (104) pour la réception de la deuxième saisie comprend un capteur de mouvement et/ou un capteur de position du document (100).

8. Document (100) selon la revendication 7, où le capteur de mouvement comprend un capteur inertiel du document (100) et/ou où le capteur de position comprend un magnétomètre du document (100).

9. Document (100) selon la revendication 7, ou 8, où le capteur de mouvement, et/ou le capteur de position, comprend au moins une antenne, où le moyen de processeur (108) est conçu pour détecter le mouvement du document (100), et/ou le transfert, ou le maintien du document (100) dans une position prédéfinie en raison d'une tension d'antenne induite dans l'antenne.

10. Document (100) selon la revendication 9, où le mouvement du document (100), et/ou le transfert, ou le maintien du document (100) dans une position prédéfinie peuvent être détectés à partir du déroulement dans le temps de la tension d'antenne en raison d'une force électromagnétique induite dans l'antenne.

11. Document (100) selon la revendication 6, où un moyen destiné à la réception de la deuxième saisie comprend une interface de communication envers un appareil de télécommunication mobile, où l'interface de communication (112) est conçue pour recevoir un mouvement ou une position du document (100) détectés par l'appareil de télécommunication en tant que deuxième saisie.

12. Document (100) selon l'une des revendications précédentes, où le moyen pour la réception des première et/ou deuxième saisies comprend un champ de saisie tactile (114) du document (100), où la première et/ou la deuxième saisie comprend un toucher du champ de saisie (114) par l'utilisateur.

13. Document (100) selon la revendication 12, où le champ de saisie présente un commutateur mécanique, et/ou un capteur capacitif, et/ou un capteur résistif, et/ou un capteur de pression, et/ou un capteur photo pour la saisie du toucher.

14. Document selon la revendication 12, ou 13, où le champ de saisie présente une antenne, où le moyen de processeur (108) est conçu pour détecter le toucher du champ de saisie en raison d'une modification d'une tension d'antenne induite dans l'antenne.

15. Document (100) selon l'une des revendications précédentes, où le nombre de caractères simultanément indicatifs est un.

16. Document (100) selon l'une des revendications précédentes, où le moyen de processeur (108) est conçu pour, après la réception de la première saisie et le remplacement de l'affichage de la première partie des caractères par l'affichage de la deuxième partie des caractères dans une vitesse prédéfinie,
a) définir la deuxième partie des caractères en tant que première partie des caractères et
b) remplacer l'affichage simultané de cette première partie de caractères en question par l'affichage simultané d'une nouvelle partie des caractères parmi le jeu de caractères,
c) répéter continuellement les étapes a) et b).

17. Document (100) selon l'une des revendications précédentes, où la première partie des caractères et la deuxième partie des caractères comprennent des fragments de caractères parmi le jeu de caractères, où les première et deuxième parties des fragments se superposent et où un caractère de la deuxième partie d'un fragment est géométriquement immédiatement limitrophe de la première partie d'un fragment.

18. Document (100) selon la revendication 17, où il s'agit d'une ligne de diodes électroluminescentes (300) dans le cas du dispositif d'affichage.

19. Document (100) selon l'une des revendications précédentes 1 à 17, où il s'agit d'un affichage à segments multiples (200) dans le cas du dispositif d'affichage (102 ; 200 ; 300).

20. Procédé de commande d'un dispositif d'affichage (102 ; 200 ; 300) intégré d'un document (100), où le document (100) présente un premier moyen pour la réception d'une première saisie et un moyen de processeur (108, où le dispositif d'affichage (102 ; 200 ; 300) est conçu pour indiquer simultanément un nombre restreint de caractères parmi un jeu de caractères, où le procédé exécuté par le moyen de processeur (108) comprend pour le démarrage du dispositif d'affichage (102 ; 200 ; 300) :
- un affichage simultané d'une première partie des caractères parmi le jeu de caractères,
- après la réception de la première saisie, le remplacement de l'affichage simultané de la première partie des caractères par l'affichage d'une deuxième partie des caractères parmi le jeu de caractères, où la deuxième partie est au moins partiellement différente de la première partie,
où la première saisie comprend un mouvement prédéfini du document (100) et/ou le transfert, ou le maintien du document (100) dans une position prédéfinie, **caractérisé en ce que**
le moyen pour la réception de la première saisie comprend une interface de communication vers un appareil de télécommunication mobile, où l'interface de communication (112) est conçu pour recevoir un mouvement détecté par l'appareil de télécommunication ou la position du document (100) en tant que première saisie.

21. Produit de programme informatique avec des instructions exécutables par un processeur pour la réalisation des étapes de procédé selon la revendication 20 sur un document selon l'une des revendications 1 à 19.

22. Système électronique avec un document (100) selon l'une des revendications précédentes 1 à 19 et avec un appareil de lecture pour le document (100), où l'appareil de lecture est conçu pour la création d'un champ électromagnétique.
